# EUROPÄISCHE PATENTSCHRIFT

(11) **EP 2 381 168 B1**
(45) Veröffentlichungstag und Bekanntmachung des Hinweises auf die Patenterteilung: **14.11.2012**
(21) Anmeldenummer: 11158000.7
(22) Anmeldetag: 14.03.2011
(51) Int. Cl.: F21V 17/00, F21V 17/10, B29C 65/00, B29C 65/16

(54) **Beleuchtungseinrichtung**
Illumination device
Dispositif d'éclairage

(30) Priorität: 20.04.2010 DE 102010015505
(43) Veröffentlichungstag der Anmeldung: 26.10.2011
(73) Patentinhaber: Automotive Lighting Reutlingen GmbH, 72762 Reutlingen (DE)
(72) Erfinder: Bathe, Achim, 72768 Reutlingen (DE)
(74) Vertreter: Dreiss

(56) Entgegenhaltungen:
- EP-A1- 1 672 275
- DE-A1-102005 042 722
- JP-A- 2002 292 741
- JP-A- 2004 063 333
- JP-A- 2004 349 123

## Beschreibung

Die vorliegende Erfindung betrifft eine
Beleuchtungseinrichtung eines Kraftfahrzeug mit einem Gehäuse, das eine Lichtaustrittsöffnung und eine diese verschließende, transparente Abdeckscheibe aufweist. Das Gehäuse umfasst eine die Lichtaustrittöffnung zumindest bereichsweise umgebende Aufnahmenut zur Aufnahme eines Dichtungsstegs der Abdeckscheibe. Die Aufnahmenut ist mit dem darin aufgenommenen Dichtungssteg durch Laserstrahlschweißen verbunden.

Die Erfindung betrifft außerdem ein Verfahren zur Herstellung einer Beleuchtungseinrichtung für ein Kraftfahrzeug, mit einem Gehäuse, das eine Lichtaustrittsöffnung und eine diese verschließende, transparente Abdeckscheibe aufweist, wobei das Gehäuse eine die Lichtaustrittöffnung zumindest bereichsweise umgebende Aufnahmenut zur Aufnahme eines Dichtungsstegs der Abdeckscheibe umfasst. Im Rahmen der Herstellung der Beleuchtungseinrichtung wird die Abdeckscheibe mit ihrem Dichtungssteg in die Aufnahmenut des Gehäuses eingesetzt und durch Laserstrahlschweißen verbunden.

Aus dem Stand der Technik sind verschiedenartige Beleuchtungseinrichtungen für Fahrzeuge bekannt. So unterscheidet man zunächst zwischen Scheinwerfern und Leuchten. Scheinwerfer sind ausschließlich im Frontbereich eines Fahrzeugs angeordnet. Sie dienen neben der Verkehrssicherheit durch eine Sichtbarmachung des Fahrzeugs für andere Verkehrsteilnehmer insbesondere der Ausleuchtung der Fahrbahn vor dem Fahrzeug, insbesondere in Form von Abblendlicht, Fernlicht, Nebellicht oder einer beliebig anderen Lichtverteilung, um die Sicht für den Fahrer zu verbessern. Scheinwerfer können als Lichtquelle mindestens eine Glühlampe, Gasentladungslampe oder Halbleiterlichtquelle aufweisen. Sie können nach einem Reflexionsprinzip arbeiten, wobei das von der Lichtquelle ausgesandte Licht von einem Reflektor gebündelt und zur Erzeugung einer gewünschten Lichtverteilung auf die Fahrbahn vor das mit dem Scheinwerfer ausgestattete Fahrzeug reflektiert wird, oder nach einem Projektionsprinzip arbeiten, wobei das von der Lichtquelle ausgesandte Licht von einer Primäroptik (z.B. einem Reflektor oder einer Vorsatzoptik mit totalreflektierenden Eigenschaften) gebündelt und das gebündelte Licht von einer Sekundäroptik (z.B. einer Projektionslinse) zur Erzeugung der gewünschten Lichtverteilung auf die Fahrbahn vor das Fahrzeug projiziert wird. Dabei kann zwischen der Primäroptik und der Sekundäroptik eine Blendenanordnung zur Erzeugung einer Helldunkelgrenze der Lichtverteilung angeordnet sein, deren Oberkante von der Sekundäroptik als Helldunkelgrenze auf der Fahrbahn vor dem Fahrzeug abgebildet wird.

Leuchten dienen überwiegend der Verkehrssicherheit durch Sichtbarmachung des Fahrzeugs für andere
Verkehrsteilnehmer. So werden Bugleuchten im Frontbereich des Fahrzeugs bspw. als Positionslicht, Blinklicht oder Tagfahrlicht und Heckleuchten im Heckbereich des Fahrzeugs bspw. als Bremslicht, Rücklicht, Blinklicht, Positionslicht oder als Rückfahrlicht eingesetzt. Die Bugleuchten können dabei im Scheinwerfer integriert sein, sie können aber auch als separate Leuchte am Fahrzeug ausgebildet sein. Die Leuchten können zur Realisierung einer oder mehrerer Leuchtenfunktionen ausgebildet sein. In einer Heckleuchte sind üblicherweise mehrere Leuchtenfunktionen integriert. Als Lichtquellen weisen Leuchten üblicherweise Glühlampen oder Halbleiterlichtquellen auf und arbeiten bevorzugt nach dem Reflexionsprinzip.

Die bekannten Beleuchtungseinrichtungen umfassen in der Regel ein Gehäuse, in dem ein Lichtmodul zur Erezeugung der mindestens einen Lichtverteilung angeordnet ist. Das Lichtmodul kann als ein Reflexions- oder als ein Projektionsmodul ausgebildet sein. Das Gehäuse weist in Lichtaustrittsrichtung eine Lichtaustrittsöffnung auf, die mit einer lichtdurchlässigen Abdeckscheibe verschlossen ist. Die Abdeckscheibe kann als eine klare Scheibe ohne optisch wirksame Profile (z.B. Prismen) oder zumindest bereichsweise mit optisch wirksamen Profilen ausgebildet sein. Ebenso kann die Abdeckscheibe zumindest bereichsweise eingefärbt sein. Auch ein Einfärben in unterschiedlichen Farben ist denkbar. Die Abdeckscheibe ist vorzugsweise aus Glas oder Kunststoff hergestellt.

Die Abdeckscheibe wird nach dem Stand der Technik durch bestimmte Fügeverfahren, wie bspw. durch eine formschlüssige Verbindung der Abdeckscheibe und des Gehäuses in Form von Klammern mit einem Butyldichtbett zwischen Gehäuse und Abdeckscheibe oder durch eine kraftschlüssige Verbindung in Form von Silikon/2 Komponenten PU (Polyurethan) Klebern mit dem Gehäuse verbunden. Auch ein Verschweißen (z.B. Laserstrahlschweißen) der Abdeckscheibe mit dem Gehäuse ist an sich bekannt. Laserstrahlschweißen wird bevorzugt zum stoffschlüssigen Verbinden von Bauteilen eingesetzt, die mit schmaler und schlanker Schweißnahtform und mit geringem thermischen Verzug gefügt werden sollen.

Aus der DE 101 09 595 A1 ist ein Verfahren bekannt, bei dem ein Gehäuse einer Beleuchtungseinrichtung für ein Kraftfahrzeug mit einer Abdeckscheibe verschlossen wird. Bei einer Montage der Beleuchtungseinrichtung wird eine eben ausgebildete Fläche eines an der Abdeckscheibe ausgebildeten und in Richtung Gehäuse ragendenden Dichtungsstegs an eine ebene Fläche einer an dem Gehäuse ausgebildeten, zur Aufnahme des Dichtungsstegs vorgesehene Aufnahmenut plan aufgesetzt. Durch Laserstrahlschweißen wird anschließend der Dichtungssteg in der Aufnahmenut an den ebenen Kontaktflächen verschweißt. Dabei müssen die Abdeckscheibe und das Gehäuse durch Druckplatten zusammengehalten werden, um einen guten Kontakt der beiden Komponenten während des Schweißens sicherzustellen und eine zuverlässige Verbindung zwischen den beiden Komponenten herstellen zu können. Ohne die Druckplatten würden die beiden zu verbindenden Komponenten aufgrund von Fertigungstoleranzen der Komponenten bzw. Verformungen aufgrund der Schweißtemperaturen beim Schweißen auseinanderspringen. Durch das Verwenden von Druckplatten ist die Montage der bekannten Beleuchtungseinrichtung aufwändig und kostspielig. Außerdem müssen an der Abdeckscheibe und am Gehäuse nur für die Montage Auflageflächen für die Druckplatten vorgesehen sein. Das kann sich im Design negativ auf die Beleuchtungseinrichtung auswirken. Außerdem kann es aufgrund komplexer dreidimensionaler Formen des Gehäuses, insbesondere im Bereich der Aufnahmenut, erforderlich sein, für eine Spritzform Schieber zu verwenden, um ein einfaches und schnelles Entformen des Gehäuses zu ermöglichen. Dadurch können die Herstellungskosten weiter erhöht werden.

Aus EP 1 672 275 A1 ist eine gattungsmäßige Beleuchtungseinrichtung bekannt.

Aufgabe der Erfindung ist es deshalb, die Herstellung einer Beleuchtungseinrichtung, insbesondere den Zusammenbau von Gehäuse und Abdeckscheibe, zu vereinfachen und kostengünstiger zu gestalten.

Zur Lösung der Aufgabe wird ausgehend von der Beleuchtungseinrichtung der eingangs genannten Art vorgeschlagen, dass die Aufnahmenut im Querschnitt betrachtet zwei gegenüberliegende im Wesentlichen parallel zueinander verlaufende Seitenwände aufweist, wobei über den Umfang der Aufnahmenut betrachtet zumindest abschnittsweise der Abstand der Seitenwände zueinander, im Querschnitt betrachtet zumindest an den distalen Enden der Seitenwände kleiner ist als die Breite des Dichtungsstegs in dem entsprechenden Abschnitt des Dichtungsstegs.

Ausgehend von dem Herstellungsverfahren der eingangs genannten Art wird vorgeschlagen, dass die mit ihrem Dichtungssteg in die Aufnahmenut des Gehäuses eingesetzte Abdeckscheibe zwischen zwei im Querschnitt betrachtet gegenüberliegenden im Wesentlichen parallel zueinander verlaufenden Seitenwände der Aufnahmenut eingeklemmt und dadurch in der eingesetzten Position gehalten wird und der Dichtungssteg in dieser Position mit mindestens einer der Seitenwände verschweißt wird.

Durch das Fügen des Dichtungsstegs der Abdeckscheibe mit der Aufnahmenut des Gehäuses ist zu gewährleisten, dass beide Komponenten eine gas- und feuchtigkeitsdichte Verbindung miteinander eingehen, die auch noch möglichst alterungsbeständig ist. Anderenfalls könnten die Lichtquellen in der Beleuchtungseinrichtung durch eindringende Feuchtigkeit oder Schmutz frühzeitig Schaden nehmen und/oder ein bspw. in der Beleuchtungseinrichtung angeordneter Reflektor könnte mit einer Staubschicht oder sogar Rost belegt werden, was abgesehen von der Optik auch die Funktionsfähigkeit der Beleuchtungseinrichtung beeinträchtigen würde. Eine Laserschweißnaht kann diese Anforderungen erfüllen, wenn die beiden zu verbindenden Komponenten (Fügepartner) während des Schweißens in hinreichendem Kontakt zueinander stehen. Dabei müssen Form-und Lagetoleranzen der Fügepartner berücksichtigt werden, was geeignete Spannkonzepte erfordert. Im Gegensatz zum Stand der Technik, wo zu diesem Zweck zusätzliche Druckplatten eingesetzt werden, wird erfindungsgemäß eine geeignete Ausgestaltung der Aufnahmenut und des Dichtungsstegs dergestalt vorgeschlagen, dass der Dichtungssteg über seinen Umfang betrachtet zumindest abschnittsweise zwischen den Seitenwänden der Aufnahmenut eingespannt und dadurch - zumindest für die Dauer des Schweißvorgangs - sicher und zuverlässig gehalten ist.

Der Erfindung liegt die Idee zu Grunde, allein durch eine vorgegebene Formgebung des um die Lichtaustrittsöffnung umlaufenden Dichtungsstegs und einer dazu korrespondierenden Form der Aufnahmenut zu ermöglichen, dass die Fügepartner während der Montage derart zusammengesetzt werden können, dass der Dichtungssteg dabei von den parallel zueinander verlaufenden Seitenwänden der Aufnahmenut fest eingespannt wird. Dadurch ergeben sich im Wesentlichen ideale Bedingungen für das
Laserstrahlschweißen, so dass die Schweißverbindung besonders feuchtigkeits- und staubdicht ist, und vorteilhafterweise auf zusätzliche Dichtstoffe zum Abdichten zwischen Abdeckscheibe und Gehäuse verzichtet werden kann. Der Dichtungssteg muss dabei passgenau in die Aufnahmenut einführbar sein, wobei durch das Einführen des Dichtungsstegs die Seitenwände der Aufnahmenut etwas auseinandergespreizt werden. Das bewirkt eine vollflächige Auflage der Innenseiten der Seitenwände auf der Außenseite des Dichtungsstegs und somit eine besonders gute Abdichtung. Zudem erübrigt sich dadurch ein zusätzliches externes Anpressen der Fügepartner während der Montage und es entsteht dabei trotzdem eine dichtende und alterungsbeständige Schweißnaht. Auch auf eventuelle Auflageflächen an der Abdeckscheibe und/oder am Gehäuse für eine Pressvorrichtung kann verzichtet werden, was vorteilhafterweise einen höheren Freiheitsgrad in der Gestaltung der Beleuchtungseinrichtung (der Optik bzw. des Designs) mit sich bringt. Das Laserstrahlschweißen verhindert vorteilhafterweise ungewollte Spannungen in der Abdeckscheibe oder zwischen Abdeckscheibe und Gehäuse und ist zudem ein berührungsloses und verschleißfestes Verfahren. Laserstrahlschweißen hat außerdem den Vorteil, dass es in der Regel ohne Zuführung eines Zusatzwerkstoffes ausgeführt werden kann, was ein Recycling der Beleuchtungseinrichtung vereinfacht.

Die Aufnahmenut kann an einer in Lichtaustrittsrichtung gerichteten vorderen Stirnseite des Gehäuses ausgebildet sein. Der Dichtungssteg wäre dann an einer entgegen der Lichtaustrittsrichtung gerichteten rückwärtigen Stirnseite der Abdeckscheibe ausgebildet. Selbstverständlich ist es auch denkbar, dass an einer in Lichtaustrittsrichtung gerichteten vorderen Stirnseite des Gehäuses der Dichtungssteg ausgebildet ist. Die Aufnahmenut wäre dann an einer entgegen der Lichtaustrittsrichtung gerichteten rückwärtigen Stirnseite der Abdeckscheibe ausgebildet.

Besonders vorteilhaft ist dabei, wenn die Aufnahmenut zwei unterschiedlich lange Seitenwände aufweist, wobei bevorzugt die nach außen zeigende Seitenwand der Aufnahmenut kürzer als die zum Innern der Beleuchtungseinrichtung zeigende Seitenwand ist. Die Aufnahmenut ist dabei bevorzugt parallel zu einer optischen Achse der Beleuchtungseinrichtung angeordnet. Durch die Ausgestaltung der Seitenwände ist ein gewisser Bereich des Dichtungsstegs nach außen hin freigelegt, so dass ein von außen ankommender und im Wesentlichen orthogonal zur optischen Achse der Beleuchtungseinrichtung gerichteter Laserstrahl direkt auf den Dichtungssteg auftreffen kann. Die nach innen zeigende Seitenwand der Aufnahmenut ist länger ausgebildet und bildet so eine hinreichend große Verschweißfläche zum in der Aufnahmenut eingespannten Dichtungssteg der Abdeckscheibe.

Die Schweißnaht zwischen dem Dichtungssteg und der Aufnahmenut kann beim Laserstrahlschweißen besonders wirkungsvoll gebildet werden, wenn zumindest die zum Innern der Beleuchtungseinrichtung zeigende Seitenwand der Aufnahmenut aus einem laserabsorbierenden Material (z.B. PBT = Polybutylenterephthalat) hergestellt ist und wenn zumindest der Dichtungssteg der Abdeckscheibe aus einem lasertransparenten Material (z.B. PC = Polycarbonat) hergestellt ist. Dabei kann das lasertransparente Material an der Abdeckscheibe bspw. angespritzt sein. Zum Laserstrahlschweißen eignen sich ausschließlich Thermoplaste.

Durch eine solche Materialauswahl dringt der Laserstrahl zunächst ohne wesentliche Erwärmung des Materials durch den lasertransparenten Dichtungssteg hindurch und erzeugt beim Auftreffen auf die laserabsorbierende und damit wärmeerzeugende Seitenwand der Aufnahmenut eine Schmelze, die auch das lasertransparenten Material des Dichtungsstegs schmelzen lässt. Durch das anschließende Zusammenfließen der beiden eingespannten Materialien entsteht die Schweißnaht. Dabei kann vorteilhafterweise auf eine aus dem Stand der Technik bekannte, zunächst vorgesehene Erhöhung des Materials im Bereich der Schweißnaht verzichtet werden, wobei die Erhöhung als sog. Setzweg während des Scheißvorgangs zusammenschmilzt. Dies vereinfacht die Herstellung des Gehäuses bzw. der Abdeckscheibe.

Die Montage der Beleuchtungseinrichtung kann dadurch weiter vereinfacht werden, dass die nach außen zeigende Seitenwand der Aufnahmenut an einem distalen Ende zum Innern der Beleuchtungseinrichtung hin abgeschrägt ist und/oder dass der Dichtungssteg an einem distalen Ende angespitzt bzw. abgeschrägt ist. Dies ermöglicht ein einfaches Zusammensetzen des Dichtungsstegs der Abdeckscheibe in die Aufnahmenut des Gehäuses trotz eines eventuellen Bauteilverzugs.

Weitere Vorteile ergeben sich aus der nachfolgenden Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in den Figuren dargestellt und werden in der nachfolgenden Beschreibung näher erläutert. Es zeigen, jeweils in schematischer Form:
- Figur 1: eine erfindungsgemäße Beleuchtungseinrichtung im Längsschnitt;
- Figur 2: eine Detailansicht von Verbindungselementen der Abdeckscheibe und des Gehäuses aus Figur 1 in einem nicht zusammengesetzten Zustand; und
- Figur 3: eine Detailansicht von Verbindungselementen der Abdeckscheibe und des Gehäuses aus Figur 1 in einem zusammengesetzten Zustand.

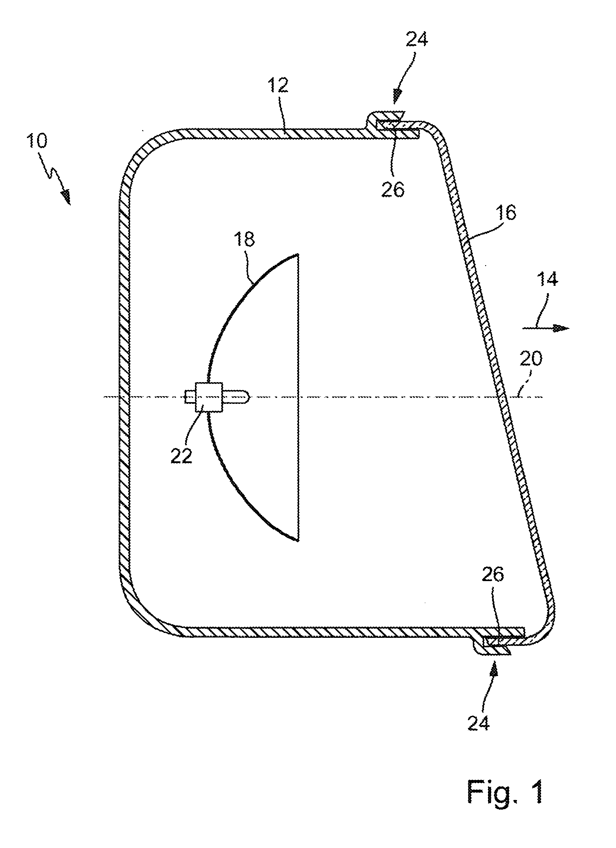

Figur 1 zeigt eine erfindungsgemäße Beleuchtungseinrichtung 10 für ein Kraftfahrzeug. Die Beleuchtungseinrichtung 10 ist vorzugsweise als ein Scheinwerfer ausgebildet. Selbstverständlich kann die Beleuchtungseinrichtung 10 auch als eine Fahrzeugleuchte ausgestaltet sein. Die Beleuchtungseinrichtung 10 weist ein Gehäuse 12 auf, das in Lichtaustrittsrichtung 14 eine mit einer lichtdurchlässigen Abdeckscheibe 16 verschlossene Lichtaustrittsöffnung aufweist. Das Gehäuse 12 ist vorzugsweise aus einem lichtundurchlässigen Kunststoff, die Abdeckscheibe 16 ist aus einem transparenten, möglichst glasklaren Kunststoff hergestellt. Sie kann in Lichtaustrittsrichtung 14 mit oder ohne optisch wirksamen Elementen ausgebildet sein und kann für den Einsatz in einer Leuchte auch rot oder gelb/orange eingefärbt sein.

Im Innern des Gehäuses 12 ist beispielhaft ein Lichtmodul mit einem Reflektor 18 angeordnet, auf dessen optischer Achse 20 eine Lichtquelle 22, bspw. zur Erzeugung einer Abblendlicht-, Fernlicht- oder einer beliebig anderen Lichtverteilung für eine Scheinwerfer- oder Leuchtenfunktion der Beleuchtungseinrichtung 10 angeordnet ist. Selbstverständlich kann die Beleuchtungseinrichtung 10 noch weitere Lichtmodule zur Erzeugung weiterer Lichtfunktionen aufweisen (nicht dargestellt). Die optischen Achsen der weiteren Lichtmodule verlaufen dabei im Wesentlichen parallel zur optischen Achse 20. Das Lichtmodul kann auch als ein Projektionsmodul mit einer zusätzlichen Sammellinse ausgebildet sein (nicht dargestellt). Als Lichtquellen 22 können eine oder mehrere Glühlampen, Gasentladungslampen oder Halbleiterlichtquellen eingesetzt werden.

Zur Befestigung der Abdeckscheibe 16 an dem Gehäuse 12 weist das Gehäuse 12 eine die Lichtaustrittsöffnung umgebende Aufnahmenut 24 auf. Die Längserstreckung der Aufnahmenut 24 ist im Wesentlichen parallel zur optischen Achse 20 der Beleuchtungseinrichtung 10 angeordnet. In die Aufnahmenut 24 ist ein Dichtungssteg 26 der Abdeckscheibe 16 eingesetzt. Der Dichtungssteg 26 und die Abdeckscheibe 16 bilden eine integrale Einheit. Dabei kann der Dichtungssteg 26 aus dem gleichen Material der Abdeckscheibe 16 bestehen, es kann aber auch ein unterschiedliches Material sein, wobei der Dichtungssteg 26 während der Herstellung an die Abdeckscheibe 16 angespritzt ist. Nähere Information zur Befestigung des Dichtungsstegs 26 in der Aufnahmenut 24 folgt weiter hinten.

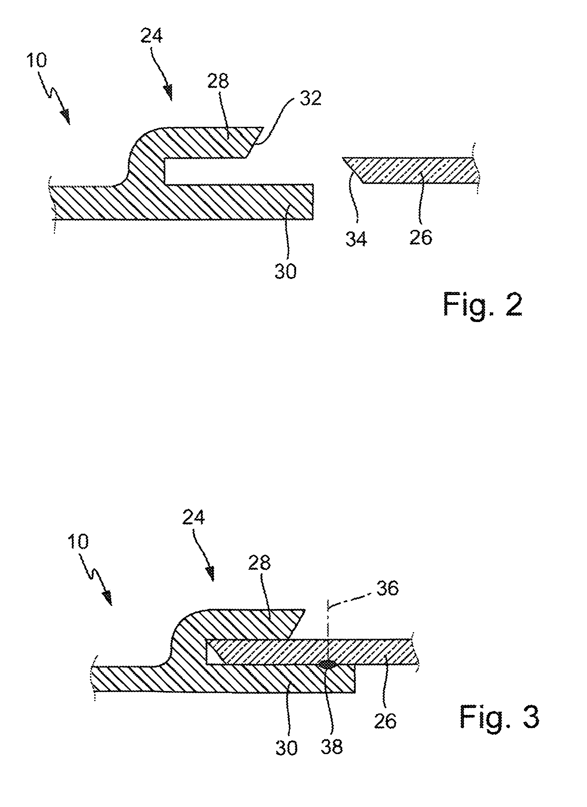

Figur 2 zeigt die Aufnahmenut 24 des Gehäuses 12 und den Dichtungssteg 26 der Abdeckscheibe 16 im Detail in einem nicht zusammengesetzten Zustand. Die Aufnahmenut 24 weist zwei parallel zueinander verlaufende Seitenwände 28 und 30 auf, wobei die Seitenwand 28 zum Äußeren der Beleuchtungseinrichtung 10 zeigt und kürzer in der Längserstreckung ausgebildet ist, als die Seitenwand 30, die zum Innern der Beleuchtungseinrichtung 10 zeigt. Die Seitenwand 28 ist an einem distalen Ende zum Innern der Beleuchtungseinrichtung 10 hin abgeschrägt (vgl. Bezugszeichen 32). Zumindest die Seitenwand 30 ist aus einem laserabsorbierenden Thermoplast (z.B. PBT = Polybutylenterephthalat) hergestellt.

Das distale Ende des Dichtungsstegs 26 ist abgeschrägt, es könnte auch angespitzt sein (vgl. Bezugszeichen 34). Die Breite des Dichtungsstegs 26 entspricht im Wesentlichen dem Abstand der Seitenwände 28 und 30 zueinander, so dass die Aufnahmenut 24 den Dichtungssteg 26 passgenau aufnehmen kann und diesen dabei fest einspannt. An den distalen Enden der Seitenwände 28 und 30 kann der Abstand auch geringfügig kleiner als die Breite des Dichtungsstegs 26 sein. Der Dichtungssteg 26 ist aus einem lasertransparenten Thermoplast (z.B. PC = Polycarbonat) hergestellt.

Figur 3 zeigt den in die Aufnahmenut 24 eingesetzten Dichtungssteg 26 im Detail. Der Dichtungssteg 26 sitzt passgenau in der Aufnahmenut 24, so dass der Dichtungssteg 26 durch die Aufnahmenut 24 fest eingespannt ist.

In diesem Zustand kann während einer Montage der Beleuchtungseinrichtung 10 der Dichtungssteg 26 in der Aufnahmenut 24 mittels Laserstrahlschweißen gas- und feuchtigkeitsdicht stoffschlüssig verbunden werden.

Laserstrahlschweißen wird vor allem zum Verschweißen von Bauteilen eingesetzt, die mit hoher Schweißgeschwindigkeit, mit schmaler, schlanker und damit unauffälliger Schweißnaht, und wegen eines im Vergleich zu anderen Schweißverfahren sehr geringen Energieeintrags mit unwesentlichem thermischen Verzug gefügt werden sollen. Das Laserstrahlschweißen wird in der Regel ohne Zuführung eines Zusatzwerkstoffes ausgeführt. Beim Laserstrahlschweißen von Kunststoffen können ausschließlich Thermoplaste verwendet werden, da nur diese eine Schmelze bilden können. Dabei werden zwei unterschiedlich wirkende Schweißpartner verwendet. Der erste Schweißpartner ist für die verwendete Laserwellenlänge transparent. Durch diesen strahlt der Laser nahezu ungehindert hindurch. Aufgrund der Transparenz erhitzt er sich kaum. Der zweite Schweißpartner muss die Strahlung absorbieren. Dazu kann z.B. auch eine Beigabe von absorbierenden Partikeln im Kunststoff beitragen. Das absorbierende Material nimmt die Energie auf, beginnt zu schmelzen und gibt dabei die entstandene Wärme durch Wärmeleitung auch an den ersten Schweißpartner weiter. Damit ein Energieübergang mit einem Materialkontakt stattfindet, müssen beide Schweißpartner passgenau und fest eingespannt sein. Durch das Zusammenfließen der beiden Stoffe kann so eine Schweißnaht hergestellt werden.

Das bedeutet für die Montage des Dichtungsstegs 26 in der Aufnahmenut 24 folgendes:
Ein Laserstrahl 36 wird von einer Laserkanone des Laserstrahlschweißgeräts (nicht dargestellt) in der Weise ausgesandt, dass er im Wesentlichen orthogonal zur Längserstreckung der Aufnahmenut 24 (oder orthogonal zur optischen Achse 20 der Beleuchtungseinrichtung 10) auf den durch die verkürzte Länge der Seitenwand 28 freigelegten Bereich des Dichtungsstegs 26 trifft. Dabei durchdringt der Laserstrahl 36 zunächst das lasertransparente Material des Dichtungsstegs 26 ohne diesen wesentlich zu erhitzen.

Anschließend trifft der Laserstrahl 36 auf das laserabsorbierende Material der Seitenwand 30 der Aufnahmenut 24. Dabei erhitzt sich das laserabsorbierende Material der Seitenwand 30 so, dass es schmilzt. Durch Wärmeleitung wird die dabei entstandene Wärme auch an das thermoplastische Material des Dichtungsstegs 26 übertragen, so dass dieses Material auch schmilzt. Es entsteht die stoffschlüssige Verbindung als verdeckte Schweißnaht 38, die gas- und feuchtigkeitsdicht, aber auch alterungsbeständig ist.

## Patentansprüche

1. Beleuchtungseinrichtung (10) für ein Kraftfahrzeug mit einem Gehäuse (12), das eine Lichtaustrittsöffnung und eine diese verschließende, transparente Abdeckscheibe (16) aufweist, wobei das Gehäuse (12) eine die Lichtaustrittöffnung zumindest bereichsweise umgebende Aufnahmenut (24) zur Aufnahme eines Dichtungsstegs (26) der Abdeckscheibe (16) umfasst, wobei die Aufnahmenut (24) mit dem darin aufgenommenen Dichtungssteg (26) durch Laserstrahlschweißen verbunden ist, **dadurch gekennzeichnet, dass** die Aufnahmenut (24) im Querschnitt betrachtet zwei gegenüberliegende im Wesentlichen parallel zueinander verlaufende Seitenwände (28, 30) aufweist, wobei über den Umfang der Aufnahmenut (24) betrachtet zumindest abschnittsweise der Abstand der Seitenwände (28, 30) zueinander, im Querschnitt betrachtet zumindest an den distalen Enden der Seitenwände (28, 30) kleiner ist als die Breite des Dichtungsstegs (26) in dem entsprechenden Abschnitt des Dichtungsstegs (26).

2. Beleuchtungseinrichtung (10) nach Anspruch 1, **dadurch gekennzeichnet, dass** die Aufnahmenut (24) im Querschnitt betrachtet zwei unterschiedlich lange Seitenwände (28, 30) aufweist.

3. Beleuchtungseinrichtung (10) nach Anspruch 2, **dadurch gekennzeichnet, dass** die im Querschnitt betrachtet äußere Seitenwand (28) der Aufnahmenut (24) kürzer als die innere Seitenwand (30) ist.

4. Beleuchtungseinrichtung (10) nach Anspruch 2 oder 3, **dadurch gekennzeichnet, dass** die im Querschnitt betrachtet kürzere Seitenwand (28) der Aufnahmenut (24) eine zu der längeren Seitenwand (30) hin abgeschrägte Stirnfläche (32) aufweist, so dass mit zunehmender Eindringtiefe in die Aufnahmenut (24) der Abstand zwischen den Seitenwänden (28, 30) kleiner wird.

5. Beleuchtungseinrichtung (10) nach einem der vorhergehenden Ansprüche, **dadurch gekennzeichnet, dass** der Dichtungssteg (26) im Querschnitt betrachtet eine spitz oder schräg zulaufende Stirnfläche (34) aufweist.

6. Beleuchtungseinrichtung (10) nach Anspruch 4, **dadurch gekennzeichnet, dass** der Dichtungssteg (26) im Querschnitt betrachtet eine zu der längeren Seitenwand (30) hin abgeschrägte Stirnfläche (34) aufweist.

7. Beleuchtungseinrichtung (10) nach einem der vorhergehenden Ansprüche, **dadurch gekennzeichnet, dass** die mit ihrem Dichtungssteg (26) in die Aufnahmenut (24) eingeführte Abdeckscheibe (16) mittels mindestens einer Schweißverbindung an dem Gehäuse (12) befestigt ist.

8. Beleuchtungseinrichtung (10) nach Anspruch 7, **dadurch gekennzeichnet, dass** die mindestens eine Schweißverbindung zwischen dem Dichtungssteg (26) und der im Querschnitt betrachtet längeren Seitenwand (30) der Aufnahmenut (24) ausgebildet ist.

9. Beleuchtungseinrichtung (10) nach Anspruch 8, **dadurch gekennzeichnet, dass** zumindest die im Querschnitt betrachtet längere Seitenwand (30) der Aufnahmenut (24) aus einem laserabsorbierenden Material besteht.

10. Beleuchtungseinrichtung (10) nach Anspruch 9, **dadurch gekennzeichnet, dass** zumindest der Dichtungssteg (26) der Abdeckscheibe (16) aus einem lasertransparenten Material besteht.

11. Verfahren zur Herstellung einer Beleuchtungseinrichtung (10) für ein Kraftfahrzeug, mit einem Gehäuse (12), das eine Lichtaustrittsöffnung und eine diese verschließende, transparente Abdeckscheibe (16) aufweist, wobei das Gehäuse (12) eine die Lichtaustrittöffnung zumindest bereichsweise umgebende Aufnahmenut (24) zur Aufnahme eines Dichtungsstegs (26) der Abdeckscheibe (16) umfasst, und wobei im Rahmen der Herstellung der Beleuchtungseinrichtung (10) die Abdeckscheibe (16) mit ihrem Dichtungssteg (26) in die Aufnahmenut (24) des Gehäuses (12) eingesetzt und durch Laserstrahlschweißen verbunden wird, **dadurch gekennzeichnet, dass** die mit ihrem Dichtungssteg (26) in die Aufnahmenut (24) des Gehäuses (12) eingesetzte Abdeckscheibe (16) zwischen zwei im Querschnitt betrachtet gegenüberliegenden im Wesentlichen parallel zueinander verlaufenden Seitenwände (28, 30) der Aufnahmenut (24) eingeklemmt und dadurch in der eingesetzten Position gehalten wird und der Dichtungssteg (26) in dieser Position mit mindestens einer der Seitenwände (28; 30) verschweißt wird.

## Claims

1. An illumination device (10) for a motor vehicle, having a housing (12), which has a light exit opening and a transparent cover plate (16) closing the light exit opening, in which the housing (12) includes a receiving groove (24) and a transparent cover plate (16) covering the light exit opening, in which the housing (12) includes a receiving groove (24), at least in some regions surrounding the light exit opening, for receiving a sealing strut (26) of the cover plate (16), and the receiving groove (24) is connected to the sealing strut (26) received in it by means of laser beam welding, **characterized in that** the receiving groove (24), viewed in cross section, has two opposed side walls (28, 30), extending essentially parallel to one another, and viewed along the circumference of the receiving groove (24), at least in some portions the spacing of the side walls (28, 30) from one another viewed in cross section at least at the distal ends of the side walls (28, 30) is less than the width of the sealing strut (26) in the corresponding portion of the sealing strut (26).

2. The illumination device (10) according to claim 1, **characterized in that** the receiving groove (24), viewed in cross section, has two side walls (28, 30) of different lengths.

3. The illumination device (10) according to claim 2, **characterized in that** the outer side wall (28), as viewed in cross section, of the receiving groove (24) is shorter than the inner side wall (30).

4. The illumination device (10) according to claim 2 or 3, **characterized in that** the shorter side wall (28), as viewed in cross section, of the receiving groove (24) has an end face (32) chamfered toward the longer side wall (30), so that with increasing penetration depth into the receiving groove (24), the spacing between the side walls (28, 30) becomes smaller.

5. The illumination device (10) according to one of the foregoing claims, **characterized in that** the sealing strut (26), viewed in cross section, has an end face (34) tapering to a point or obliquely.

6. The illumination device (10) according to claim 4, **characterized in that** the sealing strut (26), viewed in cross section, has an end face (34) chamfered toward the longer side wall (30).

7. The illumination device (10) according to one of the foregoing claims, **characterized in that** the cover plate (16), introduced by its sealing strut (26) into the receiving groove (24), is secured to the housing (12) by means of at least one welded connection.

8. The illumination device (10) according to claim 7, **characterized in that** the at least one welded connection is embodied between the sealing strut (26) and the longer side wall (30), as viewed in cross section, of the receiving groove (24).

9. The illumination device (10) according to claim 8, **characterized in that** at least the longer side wall (30), as viewed in cross section, of the receiving groove (24) comprises a laser-absorbent material.

10. The illumination device (10) according to claim 9, **characterized in that** at least the sealing strut (26) of the cover plate (16) comprises a laser-transparent material.

11. A method for producing an illumination device (10) for a motor vehicle having a housing (12), which has a light exit opening and a transparent cover plate (16) closing the light exit opening, in which the housing (12) includes a receiving groove (24 and a transparent cover plate (16) covering the light exit opening, in which the housing (12) includes a receiving groove (24), at least in some regions surrounding the light exit opening, for receiving a sealing strut (26) of the cover plate (16), and in which in the course of the production of the illumination device (10), the cover plate (16) is inserted by its sealing strut (26) into the receiving groove (24) of the housing (12) and connected by laser beam welding, **characterized in that** the cover plate (16) inserted by its sealing strut (26) into the receiving groove (24) of the housing (12) is clamped between two side walls (28, 30) of the receiving groove (24), which as viewed in cross section are opposed to one another and extend essentially parallel to one another, and is held thereby in the inserted position, and the sealing strut (26) is welded in this position to at least one of the side walls (28; 30).

## Revendications

1. Dispositif d'éclairage (10) pour un véhicule automobile, doté d'un boîtier (12) comprenant une ouverture de sortie de lumière et un cabochon transparent (16) fermant ladite ouverture, le boîtier (12) comprenant une rainure de logement (24) entourant au moins par zones l'ouverture de sortie de lumière et destinée à loger une entretoise d'étanchéité (26) du cabochon (16), la rainure de logement (24) étant reliée à l'entretoise d'étanchéité (26) logée dans celle-ci par soudage au laser, **caractérisé en ce que** la rainure de logement (24) comprend, vu en section transversale, deux parois latérales (28, 30) opposées et s'étendant sensiblement parallèlement l'une à l'autre, l'écart entre les parois latérales (28, 30), vu sur toute la circonférence de la rainure de logement (24) au moins par parties, vu en section transversale au moins sur les extrémités distales des parois latérales (28, 30), étant inférieur à la largeur de l'entretoise d'étanchéité (26) dans la partie correspondante de l'entretoise d'étanchéité (26).

2. Dispositif d'éclairage (10) selon la revendication 1, **caractérisé en ce que** la rainure de logement (24) comprend, vu en section transversale, deux parois latérales (28, 30) de différente longueur.

3. Dispositif d'éclairage (10) selon la revendication 2, **caractérisé en ce que** la paroi latérale (28) extérieure de la rainure de logement (24), vu en section transversale, est plus courte que la paroi latérale intérieure (30).

4. Dispositif d'éclairage (10) selon la revendication 2 ou 3, **caractérisé en ce que** la paroi latérale plus courte (28) de la rainure de logement (24), vu en section transversale, comprend une surface frontale (32) chanfreinée en direction de la paroi latérale plus longue (30), de sorte que l'écart entre les parois latérales (28, 30) diminue à mesure qu'augmente la profondeur de pénétration dans la rainure de logement (24).

5. Dispositif d'éclairage (10) selon l'une quelconque des revendications précédentes, **caractérisé en ce que** l'entretoise d'étanchéité (26), vu en section transversale, comprend une surface frontale (34) se terminant en pointe ou en biseau.

6. Dispositif d'éclairage (10) selon la revendication 4, **caractérisé en ce que** l'entretoise d'étanchéité (26), vu en section transversale, comprend une surface frontale (34) chanfreinée en direction de la paroi latérale plus longue (30).

7. Dispositif d'éclairage (10) selon l'une quelconque des revendications précédentes, **caractérisé en ce que** le cabochon (16) introduit avec son entretoise d'étanchéité (26) dans la rainure de logement (24) est fixé sur le boîtier (12) au moyen d'au moins un assemblage par soudure.

8. Dispositif d'éclairage (10) selon la revendication 7, **caractérisé en ce que** le ou les assemblages par soudure sont réalisés entre l'entretoise d'étanchéité (26) et la paroi latérale plus longue (30) de la rainure de logement (24), vu en section transversale.

9. Dispositif d'éclairage (10) selon la revendication 8, **caractérisé en ce qu'**au moins la paroi latérale plus longue (30) de la rainure de logement (24), vu en section transversale, est constituée d'un matériau absorbant un laser.

10. Dispositif d'éclairage (10) selon la revendication 9, **caractérisé en ce qu'**au moins l'entretoise d'étanchéité (26) du cabochon (16) est constituée d'un matériau transparent au laser.

11. Procédé de fabrication d'un dispositif d'éclairage (10) pour un véhicule automobile, doté d'un boîtier (12) comprenant une ouverture de sortie de lumière et un cabochon transparent (16) fermant ladite ouverture, le boîtier (12) comprenant une rainure de logement (24) entourant l'ouverture de sortie de lumière au moins par zone et destinée à loger une entretoise d'étanchéité (26) du cabochon (16), et, dans le cadre de la fabrication du dispositif d'éclairage (10), le cabochon (16) étant inséré avec son entretoise d'étanchéité (26) dans la rainure de logement (24) du boîtier (12) et étant relié par soudage au laser, **caractérisé en ce que** le cabochon (16) inséré avec son entretoise d'étanchéité (26) dans la rainure de logement (24) du boîtier (12) est serré entre deux parois latérales (28, 30) opposées de la rainure de logement (24) s'étendant sensiblement parallèlement l'une à l'autre, vu en section transversale, et de ce fait retenu dans la position insérée et l'entretoise d'étanchéité (26) est soudée dans cette position à au moins l'une des parois latérales (28 ; 30).
